# EUROPEAN PATENT APPLICATION

(11) **EP 1 792 713 A2**
(43) Date of publication of application: **06.06.2007**
(21) Application number: 06124828.2
(22) Date of filing: 27.11.2006
(51) Int. Cl.: B29D 30/16, B29C 70/38

(54) **Tire cord application station and method**

(30) Priority: 01.12.2005 US 291266
(71) Applicant: The Goodyear Tire & Rubber Company, Akron, Ohio 44316-0001 (US)
(72) Inventor: Weissert, James Thomas, Fairlawn, OH 44333 (US); Delgado, Andres Ignacio, Medina, OH 44256 (US); Currie, William Dudley, Stow, OH 44224 (US); Sieverding, Mark Anthony, Uniontown, OH 44685 (US)
(74) Representative: Kutsch, Bernd

(57) **Abstract**

A ply application station (10) for applying a tire carcass cord ply to an annular surface (43) includes a plurality of applicator heads (56) disposed at respective spaced apart circumferential locations about the annular surface, each applicator head being proximally positioned to a respective assigned region of the annular surface. The system coordinates the application of at least one ply cord (32) by each head to the annular surface region assigned respectively to each head. The plurality of applicator heads operate independently within their respective assigned regions while the core annular surface is rotatably indexed in order to achieve a desired cord ply pattern.

## Description

### Field of the Invention

This invention relates generally to an apparatus for manufacturing a toroidal carcass ply for a tire and, more specifically, to an apparatus station and method for applying a cord ply to an annular tire building surface.

### Background of the Invention

Historically, the pneumatic tire has been fabricated as a laminate structure of generally toroidal shape having beads, a tread, belt reinforcement, and a carcass. The tire is made of rubber, fabric, and steel. The manufacturing technologies employed for the most part involved assembling the many tire components from flat strips or sheets of material. Each component is placed on a building drum and cut to length such that the ends of the component meet or overlap creating a splice.

In the first stage of assembly the prior art carcass will normally include one or more plies, and a pair of sidewalls, a pair of apexes, an innerliner (for a tubeless tire), a pair of chafers and perhaps a pair of gum shoulder strips.

This intermediate article of manufacture would be cylindrically formed at this point in the first stage of assembly. The cylindrical carcass is then expanded into a toroidal shape after completion of the first stage of tire building. Reinforcing belts and the tread are added to this intermediate article during a second stage of tire manufacture, which can occur using the same building drum or work station.

This form of manufacturing a tire from flat components that are then formed toroidially limits the ability of the tire to be produced in a most uniform fashion. As a result, an improved method and apparatus has been proposed, involving applying an elastomeric layer on a toroidal surface and placing and stitching one or more cords in continuous lengths onto the elastomeric layer in predetermined cord paths. The method further includes dispensing the one or more cords from spools and guiding the cord in a predetermined path as the cord is being dispensed.

The above method is performed using an apparatus for forming an annular toroidially shaped cord reinforced ply which has a toroidal mandrel, a cord dispenser, a device to guide the dispensed cords along predetermined paths, a device to place an elastomeric layer on the toroidal mandrel, a device to stitch the cords onto the elastomeric layer, and a device to hold the cords while loop ends are formed. The device to stitch the cords onto the elastomeric layer includes a bi-directional tooling head mounted to a tooling arm. The arm moves the head across the curvature of a tire carcass built on a drum or core while the cord is fed through the exit opening between the rollers.

While working well, certain challenges exist in the aforementioned proposed apparatus and method. First, tooling head rollers are configured and mounted to maintain continuous contact with the annular surface while each roller alternatively engages the cord along a respective application path. Such a configuration results in greater than preferred surface contact between the applicator head and the annular surface because both rollers are in constant contact with the surface. Constant contact between each roller and the annular surface requires that relatively more force is needed to move the roller head over the surface. Moreover, the mechanism required to move the applicator head along the curvature of a tire carcass and to form the loop ends of the cord at each terminal end of a carcass traverse is undesirably complicated because of the fixed angular relationship of both rollers to the annular carcass surface, resulting in increased tooling manufacturing and maintenance costs.

Also, while the apparatus and method described above represents a faster and more efficient technique for laying a cord ply on an annular surface, a need for even greater speed and efficiency remains. Producing a cord ply on a core by means of single cord application to the circumference of a core surface consumes significant manufacturing time. The cord laying operation, in fact, can represent the most significant time component in building a tire layer by layer on a core. Improvement in the cord application step in the process through increased speed and efficiency is, therefore, extremely important and valuable in achieving overall commercial validation of the process.

A need, accordingly, remains for an applicator head that is simple to construct, operationally reliable and efficient, and effective in bi-directional application of a single end cord to a tire carcass. Furthermore, a need exists for an applicator head that can effectively apply a tire cord without the need for separate equipment to form loop ends, and separate equipment necessary to press and release the cord. Additionally, a need exists for a station and method that can efficiently and quickly apply a cord ply to a core so as to minimize the time required.

### Summary of the Invention

The invention relates to a station according to claim 1 and to a method according to claim 8. Dependent claims cover preferred embodiments of the invention.

Pursuant to one aspect of the invention, a ply application station for applying a tire carcass cord ply to an annular surface includes a plurality of applicator heads disposed at respective spaced apart circumferential locations about the annular surface, each applicator head proximally positioned to a respective assigned region of the annular surface. At least one ply cord is applied by each head on the annular surface region assigned respectively to each head. According to a further aspect of the invention, the plurality of applicator heads operate substantially in unison. The annular surface may be rotationally indexed a pre-determined angular distance to move the respective assigned surface region relative to each applicator head.

According to a further aspect of the invention, the annular surface comprises an outer annular elastomeric layer disposed on an annular core surface.

According to yet a further aspect of the invention, the combined application of the at least one ply cord to the annular surface regions by the plurality of applicator heads results in the formation of a substantially complete ply layer at least partially covering the annular surface in a preferred pattern.

In a further aspect of the invention, the re-orientation element comprises a tilt mechanism carrying the cord engaging means, the tilt mechanism pivoting the cord engaging means relative to the assigned annular surface region between first and second angular positions.

According to a further aspect of the invention, a cord engaging device preferably although not necessarily in the form of in-line rollers is mounted to reciprocally move in a forward and a reverse direction across the assigned annular surface region of each applicator head, the rollers positioning one or more cords on the assigned annular surface region of the applicator head in the forward and reverse directions. The rollers may be tilt in alternative directions in the forward and reverse directions to alternatively engage one or the other of the rollers against the annular surface.

In another aspect of the invention, a method for applying a tire carcass cord ply to an annular surface of a tire component includes: positioning a plurality of ply applicator heads at respective spaced apart circumferential locations about the annular surface, each applicator head proximally positioned to a respective assigned region of the annular surface; and coordinating operation of the plurality of applicator heads for respective application of at least one ply cord by each applicator head on the annular surface region assigned respectively to each applicator head. The applicator heads may operate in unison to substantially simultaneously apply the ply cord to all assigned surface regions in order to expedite the cord ply application step.

In a further aspect of the invention, the method further comprises moving each applicator head laterally within the respective annular surface region assigned to each applicator head; and indexing the annular surface in a rotational angular adjustment coordinated with the lateral movement of each applicator head. This indexing may further comprise less than a full revolution of the annular surface. The annular surface preferably is an elastomeric layer applied prior to commencing application of at least one cord layer on the annular surface region assigned to each applicator head.

### Definitions

"Axial" and "axially" means the lines or directions that are parallel to the axis of rotation of the tire.
"Circumferential" means lines or directions extending along the perimeter of the surface of the annular tread perpendicular to the axial direction.
"Carcass" means the tire structure apart from the belt structure, tread, undertread, over the plies, but including beads, if used, on any alternative rim attachment.
"Casing" means the carcass, belt structure, beads, sidewalls and all other components of the tire excepting the tread and undertread.
"Cord" means one of the reinforcement strands of the plies in the tire comprise.
"Equatorial Plane (EP)" means the plane perpendicular to the tire's axis of rotation and passing through the center of its tread.
"Placement" means positioning a cord on a surface by means of applying pressure to adhere the cord at the location of placement along the desired ply path.
"Ply" means a layer of rubber-coated parallel cords.
"Radial" and "radially" mean directions radially toward or away from the axis of rotation of the tire.
"Winding" means a wrapping of a cord under tension onto a convex surface along a linear path.

### Brief Description of the Drawings

The invention will be described by way of example and with reference to the accompanying drawings in which:
FIG. 1 is a perspective view of a tire making station employing a plurality of ply laying assemblies, each configured pursuant to an aspect of the invention.
FIG. 1A is a perspective view similar to FIG. 1 showing the tire making station enclosed within a protective cage.
FIG. 2 is a side elevation view of the tire making station showing spatial dispensation of plural ply laying assemblies about a tire build core.
FIG. 3A is an enlarged perspective view of one ply laying assembly disposed at an initial position relative to a tire build core that is partially sectioned for illustration.
FIG. 3B is an enlarged perspective view of the ply making assembly shown in FIG. 3A at a subsequent intermediate position along a ply laying path relative to the tire build core.
FIG. 3C is an enlarged perspective view of the ply laying assembly shown in FIG. 3A at a subsequent terminal position relative to the tire build core.
FIG. 4 is a front elevation view shown in partial transverse section for illustration of a ply laying apparatus configured pursuant to the invention at the terminal position relative to the tire build core.
FIG. 5 is an enlarged perspective view of ply laying assembly.
FIG. 6 is a rear elevation view of the ply laying assembly.
FIG. 7 is a side elevation view of the ply laying assembly showing sequential operation of the support arm slide mechanism in phantom.
FIG. 8 is a transverse section view through the ply laying apparatus.
FIG. 9 is a side elevation view of the ply laying apparatus co-mounted adjacent a cord tensioning and feed assembly.
FIG. 10 is an enlarged perspective view of the cord tensioning and feed assembly.
FIG. 11 is a bottom plan view of the ply laying assembly.
FIG. 12 is a transverse section view through the ply laying end of arm tooling.
FIG. 13A is a transverse section view through the ply laying end of arm tooling shown in the retracted position and shown in phantom in the axially elongated position.
FIG. 13B is a transverse section view through the ply laying end of arm tooling of FIG. 13A shown in the axially elongated position.
FIG. 14 is a transverse section view through the ply laying end of arm tooling of FIG. 13A shown moving in a tilted forward direction.
FIG. 15 is a transverse section view through the ply laying end of arm tooling of FIG. 13A shown moving in a reverse tilted reverse direction.
FIG. 16 is a front right perspective view of the ply laying end of arm tooling with portions sectioned for clarity.
FIG. 16A is a partially exploded perspective view of the roller assembly of the ply laying end of arm tooling.
FIG. 16B is a left side perspective view of the end of arm tooling without the outer housing shown for the purpose of illustrating the position of the shear piston and linkage in the extended position.
FIG. 16C is a left side perspective view of the end of arm tooling without the outer housing shown for the purpose of illustrating the position of the shear piston and linkage in the retracted position.
FIG. 17 is an exploded perspective view of the cord cutting subassembly of the ply laying end of arm tooling.
FIGS. 18A-D are sequential views of the tire forming mandrel showing the build of a ply layer by means of single cord application pursuant to the invention.
FIGS. 19-28 are representative ply cord patterns that may be applied to an annular core surface pursuant to the invention.

### Detailed Description of the Illustrative Embodiments

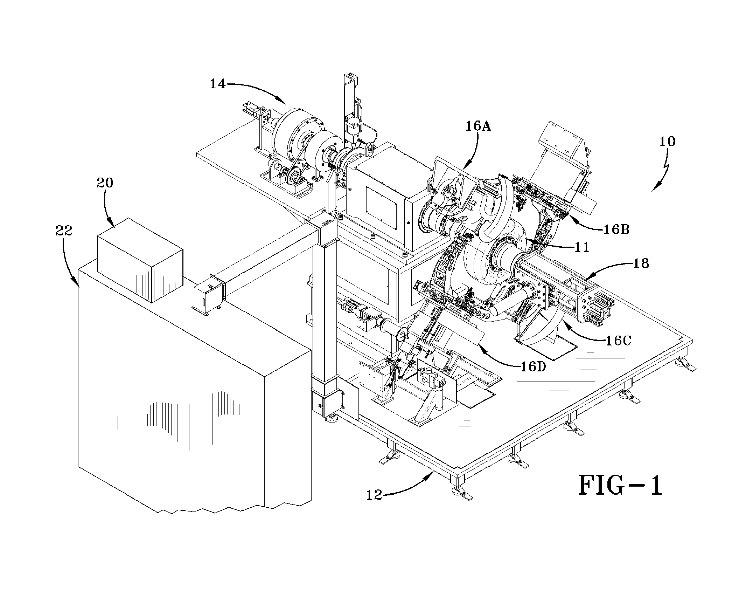

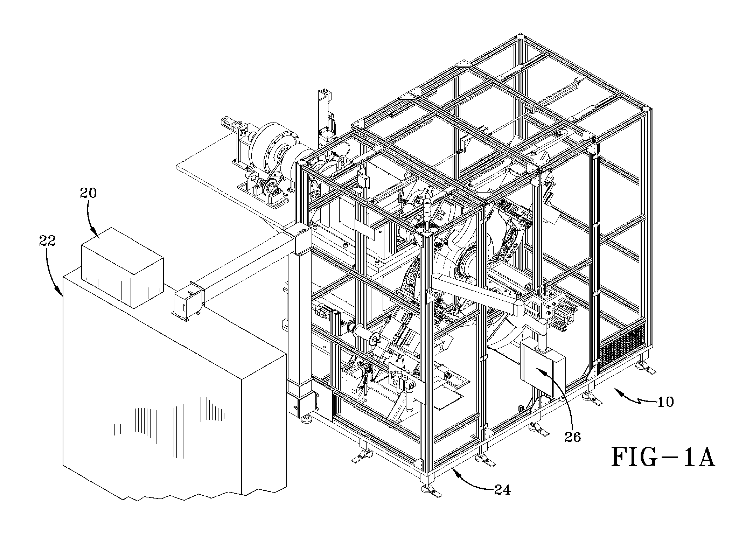

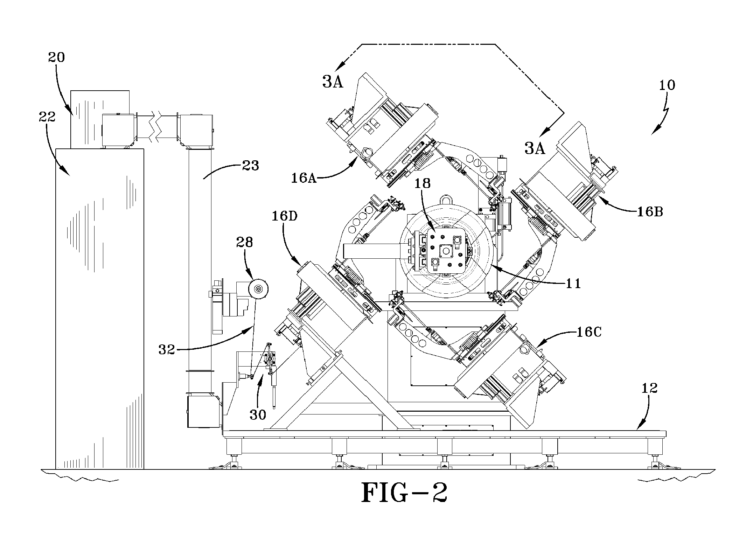

Referring initially to FIGS. 1, 1A, and 2, a machine assembly 10 is shown for the construction of a tire on a core assembly 11. The core assembly 11 is generally of toroidal shape and a tire is formed thereon by the sequential layering of tire components on the toroidal form of the core. A platform 12 may be deployed as support for the assembly 10. A drive motor 14 is coupled by a conventional shaft to rotate the core assembly 11 as tire component layers are sequentially applied to the toroidal core.

The referenced drawings depict four arm assemblies 16 A-D surrounding the core assembly in a preferred arrangement. While four assemblies are incorporated in the system embodiment 10, the invention is not to be so limited. A single arm assembly may be used if desired. Alternatively, more or fewer than four assemblies may constitute the system if desired. The four arm assemblies 16 A-D are disposed to surround the core assembly 10 at a preferred spacing that allows the arm assemblies to simultaneously construct a cord ply to respective regions of the toroidal core. Dividing the surface area of the toroidal core into four quadrants, each assigned to a respective one of the four arm assemblies, allows the cord ply layer to be formed simultaneously to all four quadrants, whereby expediting the process and saving time and manufacturing cost.

A core removal assembly 18 is shown disposed to remove the core assembly 11 from between the arm assemblies 16 A-D once tire construction on the core is complete. An appropriate computer control system conventional to the industry may be employed to control the operation of the system 10 including arm assemblies 16 A-D. A control system of the type shown will typically include a housing 22 enclosing the computer and system control hardware. Electrical control signals will be transmitted to the system 10 by means one or more suitable cable conduit such as that show at numeral 23.

A cage or peripheral guard structure 24 may enclose the system 10 as shown in FIG. 1A. An additional pendant control unit 26 for the control cooler unit 20 is mounted to the guard 24. Each of the arm assemblies 16A-D is serviced by a cord let off assembly or spool 28, only one of the four being shown in FIG. 2 for the sake of clarity. A balancer assembly 30 is associated with each let off assembly 28 for placing cord 32 fed from the assembly 28 in proper tension and balance. The cord 32 is fed as shown through the balancer assembly 20 to the arm assembly 16D.

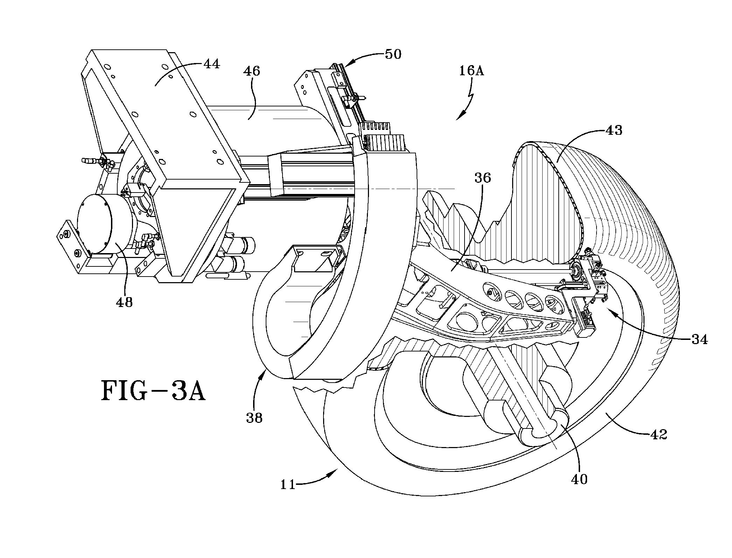

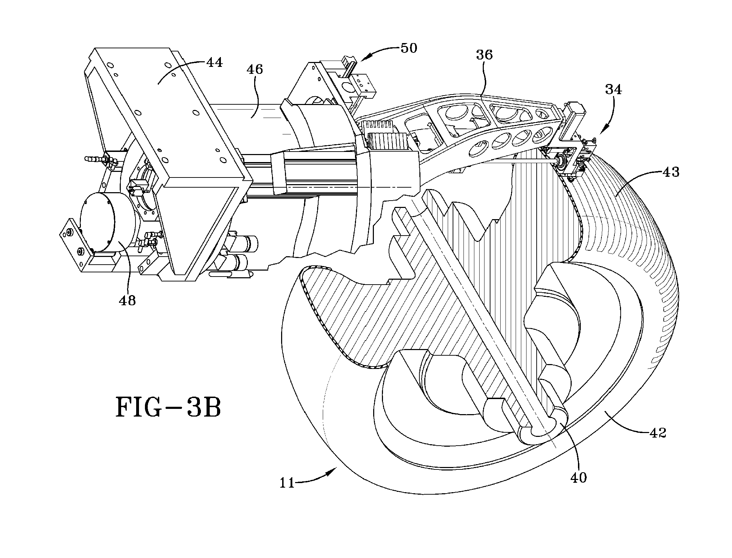

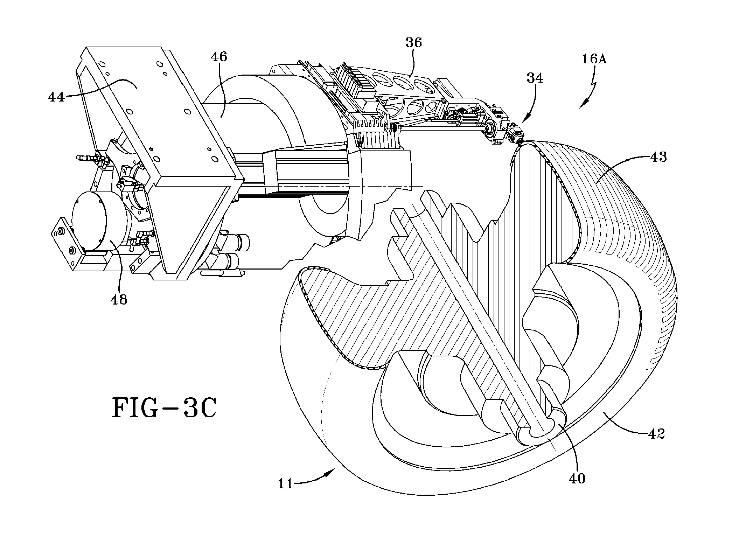

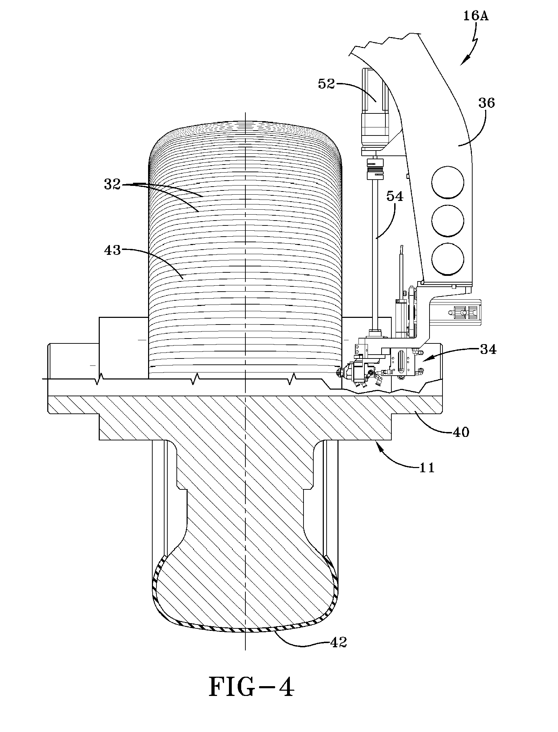

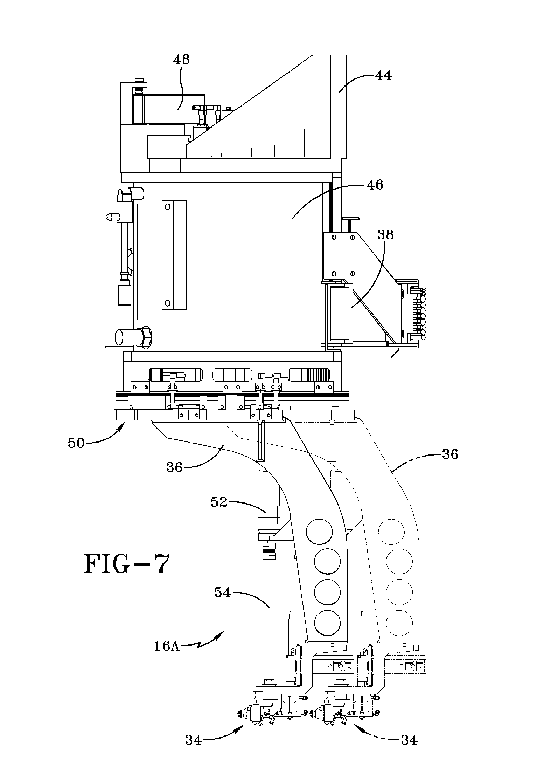

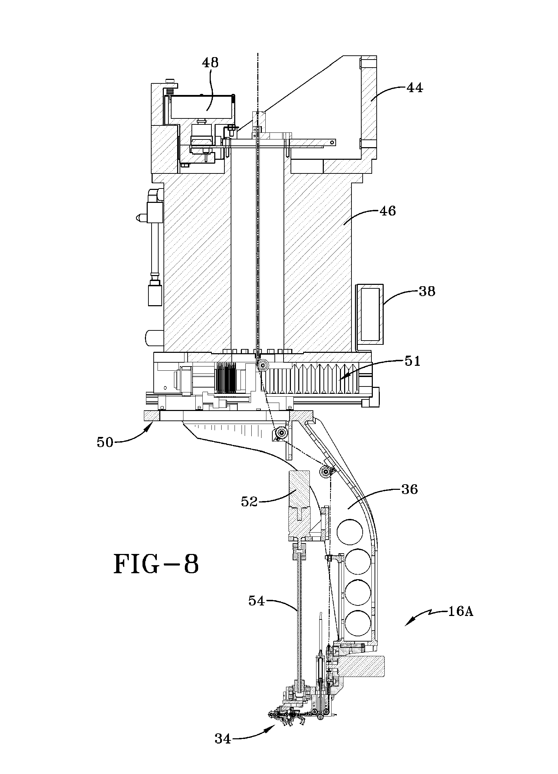

In FIGS. 3A-C and 4, operation of one arm assembly 16D is sequentially depicted and will be readily understood. The arm assembly 16D is configured to provide end of arm tooling assembly 34 carried by C-frame arm 36, electrically serviced by suitable cabling extending through cable tray 38. As explained previously, the core assembly 11 is configured having a rotational axial shaft 40 and a segmented toroidal core body 42 providing an annular outer toroidal surface 43. A main mounting bracket 44 supports the end of arm tooling assembly 34 as well as a drive motor 46 and clutch assembly 48. As best seen from joint consideration of FIGS. 4, 5, 6, 7, and 8, the C-frame arm 36 is slideably attached to a Z-axis vertical slide member 50 and moves along a Z-axis to traverse the width of the outer core toroidal surface 43. Movement of the arm 36 along slide member 50 facilitates the laying of cord on cores for tires of varying sizes. FIG. 3A depicts the arm assembly 36 at a beginning position relative to surface 43; FIG. 3B a position mid-way along the transverse path across surface 43; and FIG. 3C a terminal transverse position of assembly 36 at an opposite side of the surface 43. FIG. 7 illustrates the movement of arm assembly 36 along slide 50 to facilitate movement of assembly 36 between the sequential positions illustrated in FIGS. 3A-C. Drive shaft 51 is coupled to the arm assembly 36 as seen from FIG. 8 and drives the assembly along the Z-axis path in reciprocal fashion responsive to control instructions.

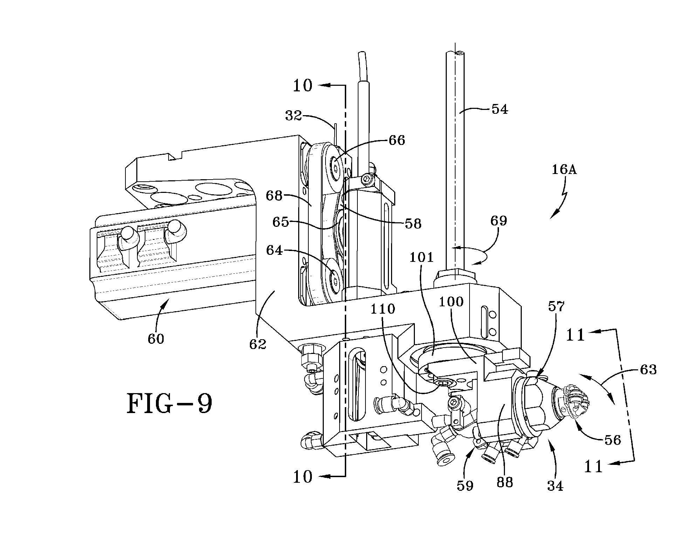

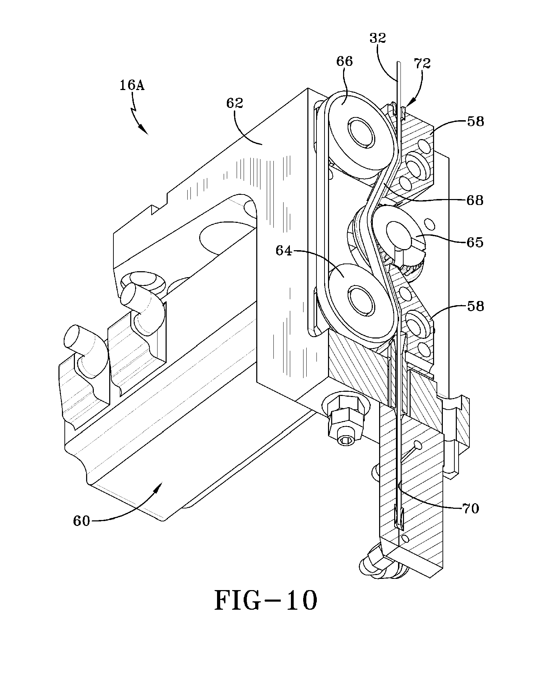

An end of arm tooling motor 52 is further mounted on arm assembly 36 and rotatably drives end of arm tooling shaft 54. The end of arm tooling 34 consists of a bi-directional cord laying head assembly 56, an intermediate housing assembly 57, and an upper housing assembly 59. The end of arm tooling 34 further includes a cord tensioning sub-assembly 58 as shown in detail in FIGS. 9 and 10. Sub-assembly 58 includes a drive motor 60, the motor 60 being mounted on an S-shaped block 62. The sub-assembly 58 further includes a first pulley 64; a spatially adjustable cord pulley 65; and a third pulley 66. An elongate closed-end tensioning belt 68 routes around the pulleys 64, 66 as shown. A cord guiding terminal tube 70 extends from the pulley and belt tensioning region of assembly 58 through the block 62. An initial cord guiding passageway 72 enters into the block 62 and guides cord 32 through the block and into the tensioning region of assembly 58. Belt 68 is routed around pulleys 64, 66 and is rotated thereby. It will be appreciated that the cord 32 is routed as shown between belt 68 and pulley 65 and is axially fed by the rotation of belt 68 through the assembly 58. By adjusting the relative position of pulley 65 against the cord 32 and belt 68, the cord 32 may be placed in an optimal state of tension for subsequent routing through an applicator head. The tensioning of the cord 32 is thus optimized, resulting in a positive feed through the block 62 and to an applicator head as described following. Breakage of the cord that might otherwise occur from a more or less than optimal tension level is thus avoided. Moreover, slippage of the cord caused by a lower than desired tension in the cord is likewise avoided. Additionally, the subject cord tensioning sub-assembly 58 acts to eliminate pinching of the cord that may be present in systems employing rollers to advance a cord line. Pinching of the cord from a roller feed may act to introduce a progressive twist into the cord that will release when the cord is applied to a surface, and cause the cord to move from its intended location. The assembly 58, by employing a belt cord advance, eliminates twisting of the cord and ensures that the cord will advance smoothly without impedance.

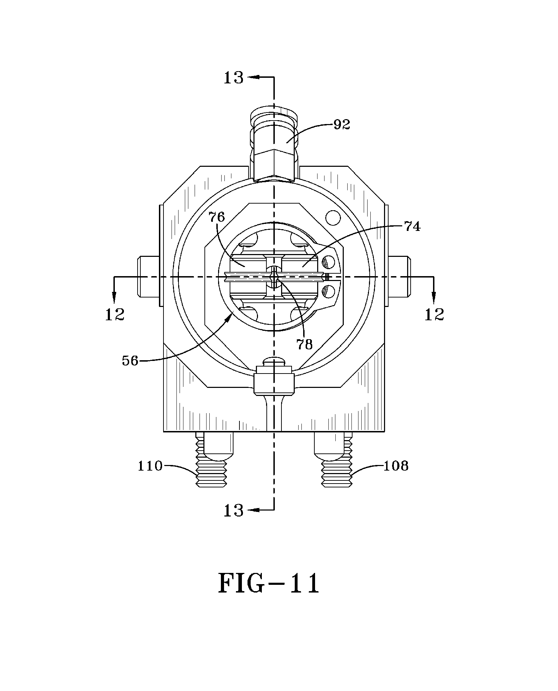

Referring next to FIGS. 11, 12, 13A, 13B, and 17, the bi-directional cord laying head assembly 56 will be described. In general, the applicator head 56 is located at a terminal end of the end of arm tooling assembly 34. The head assembly, as described below, functions to apply cord to the annular toroidal core surface 43 in a preselected pattern as one layer in the plurality of layers built upon the core 42 during construction of a tire. A pair of applicator guide rollers 74, 76 are rotatably mounted in-line to a terminal end of the end of arm tooling 34, the rollers defining a cord outlet 78 therebetween with the pivot shafts of the rollers being preferably, but not necessarily, substantially co-axial. More or fewer rollers may be employed if desired pursuant to the practice of the subject invention. The bi-directional cord laying head 56 is constructed to provide a final cord guide tube 80 extending axially to a remote end in communication with the cord outlet opening 78 between the rollers.

The intermediate assembly 57 includes a pre-loaded coil spring 82 that seats within a spring housing 84 residing within an outer housing block 85. The bi-directional cord laying head assembly 56 is placed in a downward bias against the surface 43 by the pre-loaded coil spring 82. O-rings 86 A-F are suitably located between adjacent housing block elements. The intermediate assembly 57 further includes a lower housing 88 receiving a housing block 89 therein. A terminal end of the block 89 is closed by an end cap 90 with the intersection sealed by means of O-rings 91. The block 89 represents a plunger, or piston, slideably contained within the outer housing 88 that moves axially relative to the end of arm tooling for a purpose explained below. The end of arm tooling 34 is pivotally mounted to the bracket 62 and reciprocally rotated by means of drive shaft 54 in the direction 69 as will be appreciated from FIG. 9.

FIGS. 11, 12, 13A, and 13B depict in section the end of arm tooling 34 including assemblies 56, 57, and 59. As shown, plural intake portals 92, 94, and 96 extend into the tooling assembly at respective axial locations; cylinder 92 representing a pressurized air inlet for assisting in the feeding of a severed cord end down the axial passageway of the end-of-arm assembly; cylinder 94 providing air pressure and forming an air spring by which the head assembly of the end of arm tooling is maintained at a constant pressure against the annular surface of the core; and cylinder 96 providing a pressurized air inlet that, upon actuation, initiates a shearing of the cord. The rollers 74, 76 mount to a nose block 97 that is slideably connected at a lower end of housing 89 by assembly pin 67. Pin 67 is keyed within a vertical slot in the housing 89 and prevents the nose block 67 from rotating. The block 67 and the rollers 74, 76 are thus maintained in an aligned orientation to the surface 43 of the core.

From FIG. 9, it will be appreciated that the end-of-arm tooling assembly 34 is pivotally mounted to the bracket 62 and is fixedly coupled to motor shaft 54. Shaft 54 is driven rotationally by a computer controlled servo-motor (not shown) in conventional fashion. A rotation of the shaft 54 translates into pivotal movement of assembly 34. As the assembly 34 pivots, the rollers 74, 76 tilt or pivot backward and forward, alternatively bringing the rollers into contact with the core surface 43.

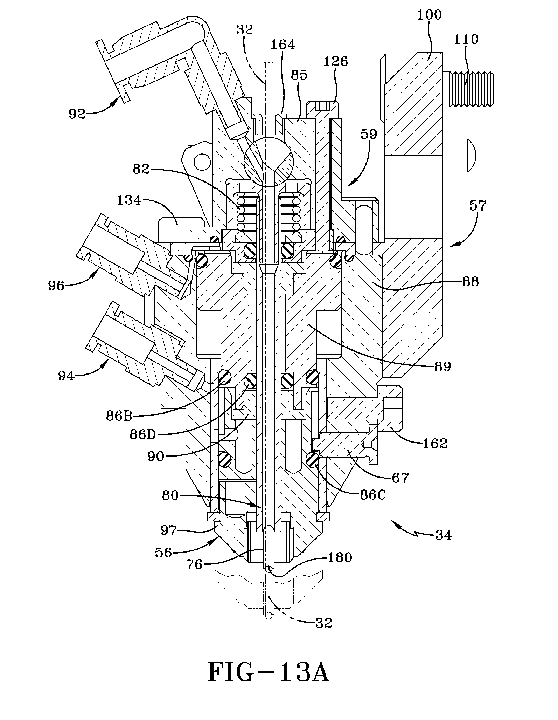

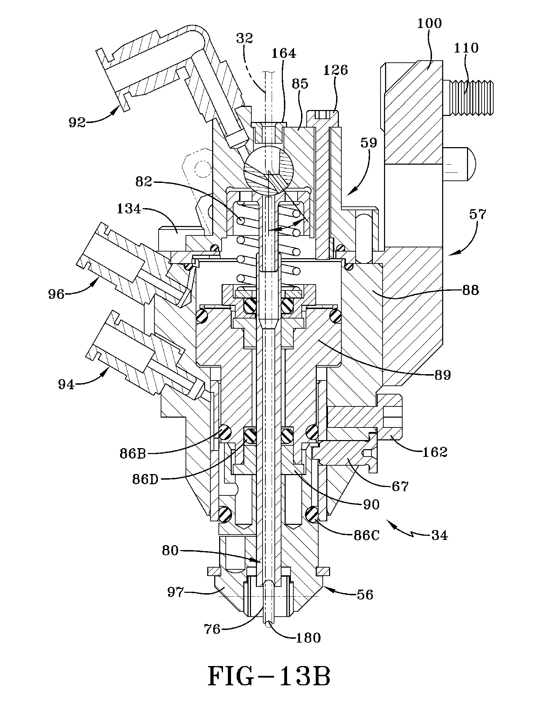

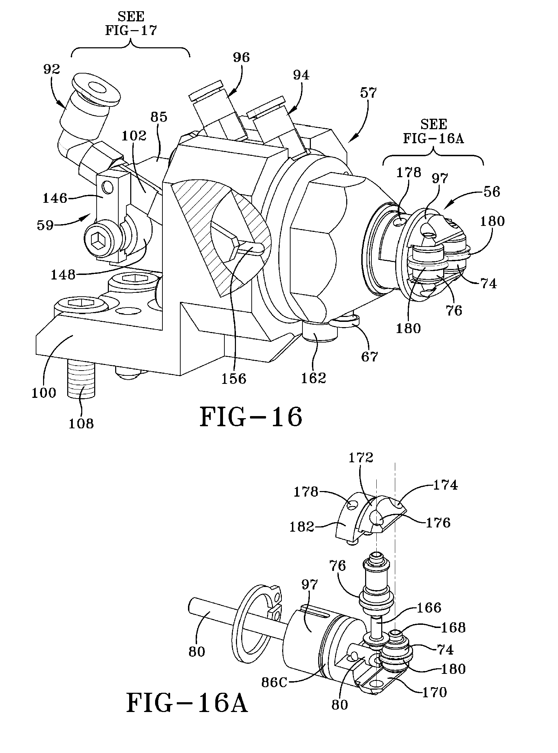

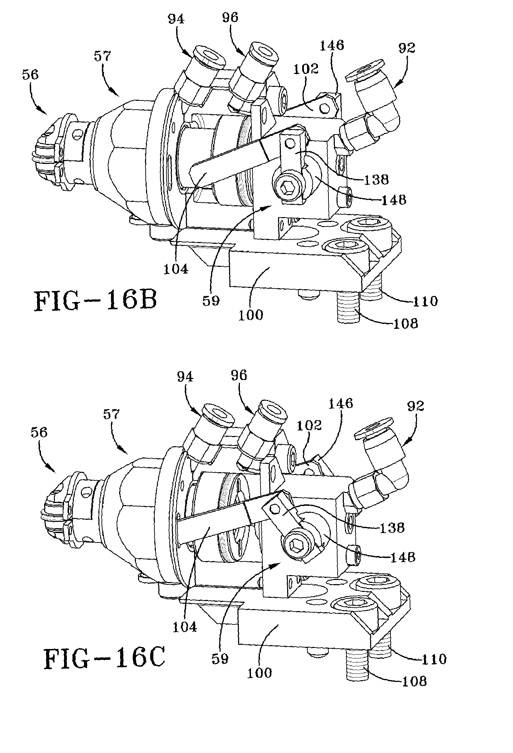

It will further be appreciated from FIGS. 13A and 13B, and FIGS. 16B-D, that the piston, or plunger, 89 moves axially within the assembly housing 88 in reciprocal fashion. Piston 89 moves independently of the bi-directional head 56. Thus, head 56 can remain in continuous contact with the core surface 43 at a constant, optimal pressure maintained by pressure intake 94. As head 56 and surface 43 remain in contacting engagement, the piston 89 is free to move axially within housing 88 under the influence of spring 82 between the extended position shown in FIG. 13B and FIG. 16C, and the axially retracted position shown in FIG. 13A and FIG. 16D. Spring 82 is in a compressed, pre-loaded condition with the piston 89 in the retracted axial position of FIGS. 13A and 16D, under load from pressure at intake 96. Upon removal or reduction of air pressure at intake 96, plunger block 89 moves to the extended position shown in FIGS. 13B and 16C, and spring 82 extends. A resumption of controlled air pressure at intake 96, under computer control, pressures piston 89 into the retracted position and reloads spring 82. Linear movement of the plunger block 89 is along the center axis of the end of arm tooling 34.

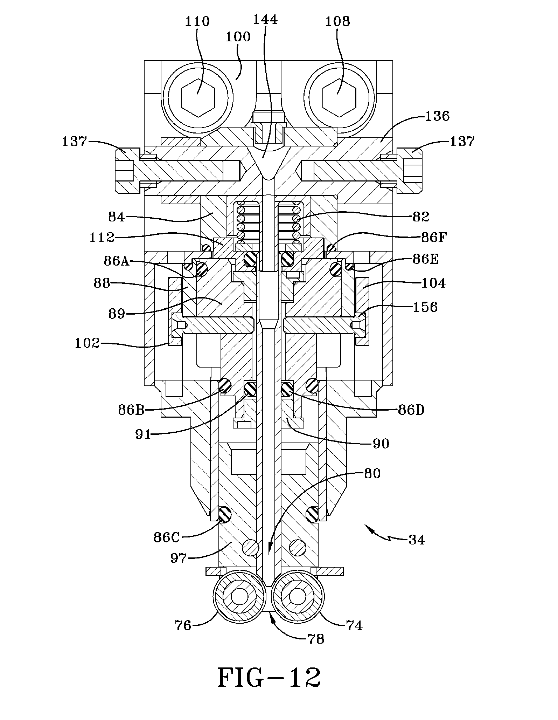

The final guide tube 80 extends along the center axis of the end-of-arm tooling 34 and, as will be understood from FIGS. 13A and 13B, the cord 32 is routed along the center axis of the upper assembly 59, the intermediate assembly 57, and the bi-directional cord laying head assembly 56 of the tooling 34 to exit from the cord outlet opening 78 between rollers 74, 76 (FIGS. 11, 12). The cord 32 thereby is positioned and pressured by the rollers 74, 76 against the core surface 43 in a preferred pattern. Depending upon the pattern of the cord layer to be applied to surface 43, the process of applying the court will require that the cord be cut one or more times. A preferred cutting mechanism will be described as follows.

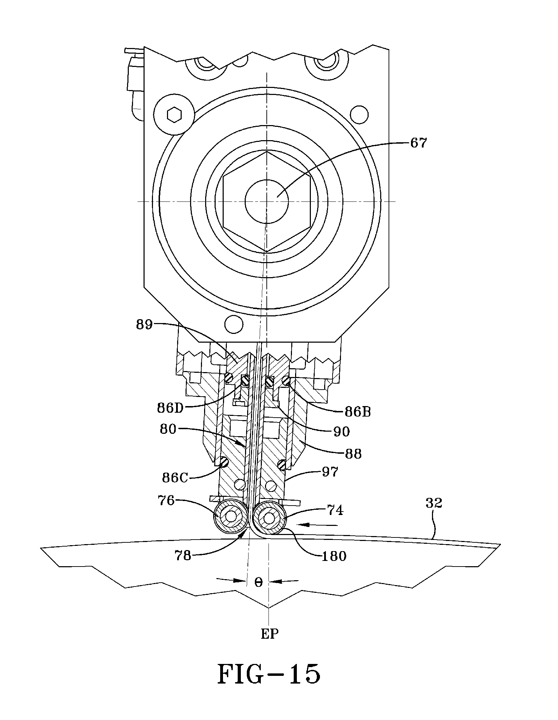

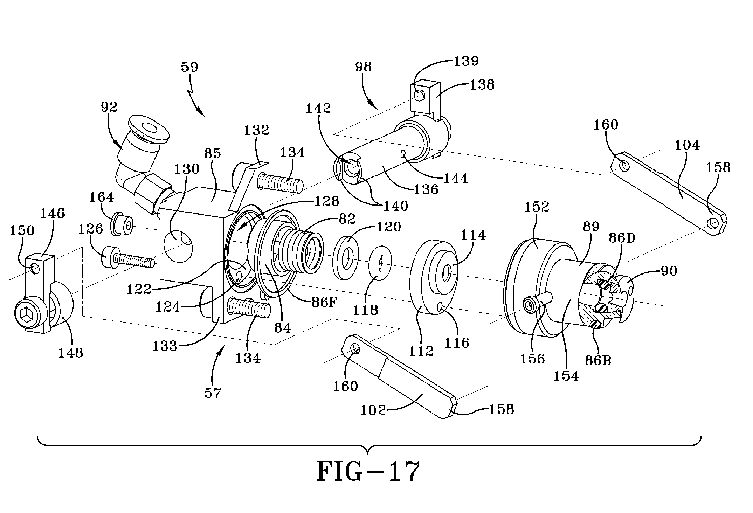

With reference to FIGS. 15B, 16, 16B, and 17, the upper assembly 59 includes a cable shear assembly 98, activated by a pair of lever arms 102,104 that extend axially along opposite sides of the piston 89 within housing 88. The upper assembly 59 includes a mounting base flange 100 that mounts to a bearing plate 101 (FIG. 9) by means of screws 108, 110. The bearing plate 101 is rotatably mounted to the end bracket 62. As described previously, the end of arm tooling 34 may thus be rotated by motor driven shaft 54. It will be appreciated from FIG. 17 that the spring 82 seats within spring housing 84 enclosed by spring end cap 112. A forward end of spring 82 seats within the end cap 112. End cap 112 includes a circular protrusion 114 and a through bore 16. End cap 112 is contained within the piston 89 as shown. O-ring 118 and washer 120 are interposed against the forward end of the spring 82 within the cap 112.

The housing block 85 includes an axial passageway 128. A recessed peripheral ledge 122 circumscribes a forward end of the passageway 128 and a through bore 124 extends into and through the housing ledge 122. A slide pin 126 projects through the bore 124 of housing 85, the bore 116 of cap 112, and into the housing 89 as shown. Piston 89 is thus slideably coupled to the block 85 and moves reciprocally in an axial direction relative thereto as described above.

A transverse bore 130 extends through housing 85 from side to side in communcation with passageway 128. Mounting flanges 132, 134 extend laterally from the housing 85 and mounting screws 134 project through the flanges and into housing 88 to secure housing 85 to housing 88. The cord cutting assembly 98 includes a tubular member 136 rotatably residing within the transverse bore 130 and projecting from opposite sides of the housing 85. An attachment lug 138 projects outward from an end of the tubular member 136 and carries an inward facing attachment stud 139. The tubular member 136 has locking flanges 140 at an opposite end and a centrally disposed axial through bore 142. A transverse bore 144 having a funnel shaped guide entry 145 is positioned to extend through the tubular member 136.

A connector block 146 is attached to an end of the tubular member 136 and includes a locking socket 148 engaging the locking flanges 140 of member 136. An attachment stud 150 extends inwardly from the block 146. Piston 89 is configured having a cylindrical rearwardly disposed socket 152 stepping inward to a forward smaller diametered cylindrical portion 154. Outwardly projecting pin members 156 extending from opposite sides of the cylindrical portion 154 of the piston 89. As will be appreciated, forward ends 158 of pivot arms 102, 104 fixedly attach to the pins 156 and rearward ends of the arm 102, 104 fixedly attach through the studs 150, 139, respectively, to flanges 146, 138 of the tubular component 136.

Tubular member 136 resides within the transverse bore 130 of the block 85 and rotates freely therein. The ends of member 136 are journalled to the piston 89 through lever arms 102, 104. The funnel shaped entry 145 is positioned facing axially rearward of assembly 34. The cord 32 is dispensed and routed downward through entry 145 of member 136 and exits from the transverse bore 144 along the longitudinal center axis of the end of arm tooling assembly 34. As described previously, spring 82 is in a pre-loaded, state of compression between housing 85 and piston 89 while the cord 32 is applied in a predesigned pattern to the annular outer core surface 43. At the completion of the cord laying sequence or at required interim points in the application process, the cord 32 may be severed through the operation of shear assembly 98. An axial movement of the piston is initiated by a reduction of air pressure at intake 94. Spring 82 thereupon is uncoils and influences the piston 89 axially away from the housing 85. As the piston 89 moves away from the housing 85, the lever arms 102, 104 pull against the ends of the tubular member 136 and impart rotation thereto within housing block 85. As the member 136 rotates, edges defining the funnel shaped entry 145 are rotated into severing engagement against the cord 32 extending through the member 136. The cord 32 is thereby severed. The free end of cord 32, subsequent to the severing procedure, is generally in an axial alignment with the tooling assembly 34.

To re-route the cord 32 down the assembly 34 in order to resume laying cord, air pressure is re-applied through intake 94 and piston 97 is forced into the higher, retracted position of FIG. 13A, whereupon recompressing spring 82. Movement of the piston 89 into the retracted position causes the lever arms 102, 104 to rotatably return the tubular member 136 into its normal orientation within block 85. So oriented, the shearing edges defining funnel entry 145 of member 136 are in a non-contacting relationship to cord 32 and funnel entry 145 and transverse bore 144 are axially aligned with the center axis of tooling assembly 34. The severed end of cord 32 is thereafter re-routed down the axis of tooling assembly 34 to exit from the gap 78 between rollers 72, 74. To assist in the re-routing of the free end of cord 32, pressurized air is introduced through intake 92 and the forced air pushes the free end of the cord 32 along its axial path. The time required to re-position the end of the cord 32 at the outlet 78 is thereby reduced and cycle time minimized. The free severed end of cord 32 upon exiting between rollers 74, 76 is thus positioned for application to the core surface as a smooth linear feed of the cord 32 through the end of arm tooling is resumed.

Rollers 74, 76 are shown in FIG. 16 A as rotationally mounted to respective axial center shafts 166, 168. Shafts 166, 168 mount between a flange extension 170 of the nose block 97 and a retainer 172. So disposed, the rollers 74, 76 are axially parallel and spaced apart a distance sufficient to allow the cord 32 to pass therebetween. The retainer 172 includes adjacent sockets 174, 176 that receive upper ends of the shafts 166, 168 therein. An assembly aperture 178 projects through a rearward surface 182 of retainer 172 as shown. Each of the rollers 74, 76 is configured to provide a circumferential channel 180 having a sectional profile and dimension complimentary with the sectional configuration of cord 32. The nose block 97 receives the cord guide tube 80 therethrough with a forward end of tube 80 disposed adjacent the gap 78 between rollers 74, 76.

Assembly of the end of arm tooling 34 will be readily apparent from FIGS. 13 A,B; 16, and 17. The nose block 97 is fixedly coupled to the housing 88 by the pin 67. The motor shaft 54 rotates reciprocally and causes the end of arm tooling to resultantly reciprocally rotate through an angular travel of plus or minus three to eight degrees. A greater or lesser range of pivotal movement may be used if desired. Pivotal movement of commensurate angular travel of in-line rollers 72, 74 is thus effected as best seen from FIG. 9. Each roller 72, 74 is alternatively brought into and out of engagement against the core surface 43 through the pivotal movement of assembly 34. The pressure applied by each roller 72, 74 against the surface 43 is controlled through application of appropriate air pressure through the intake portal 94.

As seen from FIGS. 3A-C; 5; and 7, end of arm tooling 34 mounts to the C- frame arm 36 and is carried thereby toward and away from the surface 43 of core 42. The C-frame arm 36 is slideably mounted to the Z-axis slide 50 and reciprocally moves end of arm tooling 34 laterally across the surface 43 in a predefined pattern. Adjustment in the Z axis along slide 50 is computer controlled to coordinate with the other axis of adjustment of end of arm tooling 34 to allow for the application of cord to cores of varying sizes. The cord 32 is dispensed from cord let-off spool 28, through a conventional balancer mechanism 34 and to the arm assembly. The end of cord 32 is routed at the end of arm cord tensioning assembly 58 (FIGS. 9 and 10) and then into the axial passageway through end of arm tooling assembly 34. Upon entering assembly 34, the cord 32 passes through the tubular member 136 of the cable shear assembly 98 and then proceeds along the axial guide passage 80 to the cord outlet 78 between rollers 74, 76. The cord is received within a circumferentially located roller channel 180 in each roller 74, 76, the roller receiving the cord being dependent upon the intended direction of travel of the cord across surface 43 pursuant to the predefined pattern. Appropriate pressure of the cord 32 by either roller 74 or 76 against a pre-applied carcass layer on core 42 causes the cord to adhere to the carcass layer at its intended location, thus forming the designed cord layer pattern.

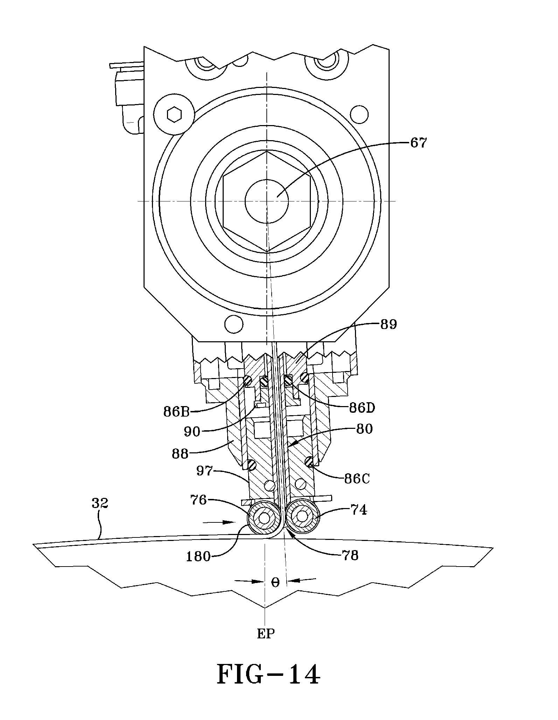

Referring to FIGS. 12, 13B, 14, and 15, the alternative tilting operation of the end of arm tooling in regard to rollers 74, 76 will be explained. The rollers 74, 76 tilt along an angular path represented by angle q (FIGS. 14 and 15) relative to the centerline of the end of arm tooling. Alternatively one or the other roller is in a dependent position relative to the other roller as a result of the pivotal movement of assembly 34. In a forward traverse of the tooling assembly across a carcass layer mounted to the core surface 43, one of the rollers will engage the cord 32 within roller channel 180 and stitch the cord 32 against the layer. For a reverse traverse of the tooling head across the carcass layer, the assembly 34 is tilted in a reverse direction to disengage the first roller from the cord 32 and place the second roller into an engaging relationship with cord 32. The second roller then effects a stitching of the cord 32 against the carcass layer mounted to core 42 in a reverse traverse.

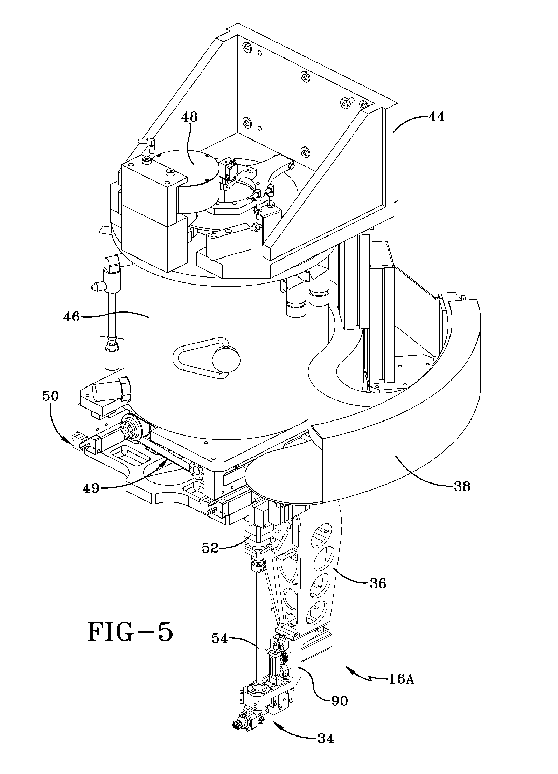

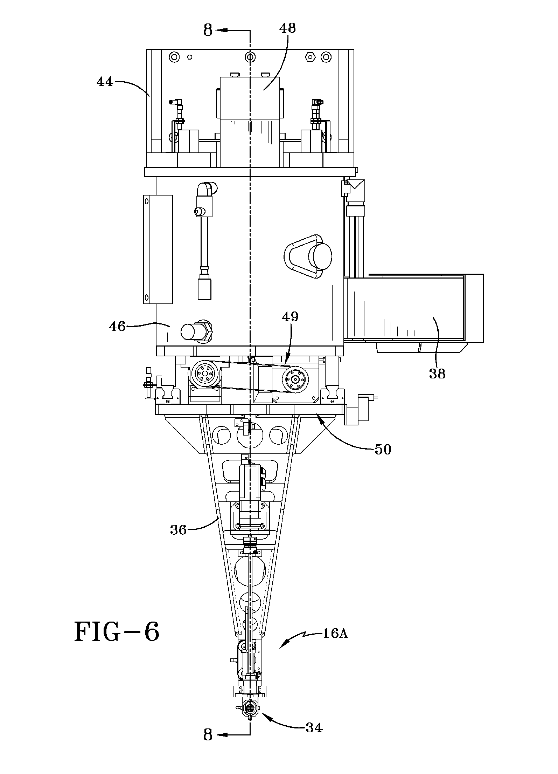

The reciprocal pivotal movement of the end of arm tooling 34 is carefully coordinated with rotational indexing of the core 42 and lateral movement of the tooling assembly 34. Referring to FIGS. 5 and 6, it will be appreciated that the subject assembly 34 in combination with the core drive constitutes a system having three axis of rotation. A first axis is represented by a pivoting of assembly 34 through an angular tile by the drive shaft 54. Shaft 54 is preferably driven by a computer controlled servo-motor 52. A second axis of rotation is the lateral rotation of the assembly 34 driven by motor 46. Motor 46 is preferably, but not necessarily a computer controlled ring motor that, responsive to computer generated control signals, can accurately index the assembly 34 along a rotational path following the outer surface 43 of the core 42. A third axis of rotation is the indexing of the core spindle 42 by motor 14 (FIG. 1). Motor 14 is preferably, but not necessarily a ring motor that, responsive to computer generated control signals, can accurately index the core 42 in coordination with the ring motor 46 rotationally driving the assembly 34.

The arm assembly 16 A, carrying end of arm tooling 34, is further adjustable along a linear path representing a z-axis as shown in FIGS. 5,6, and 7. The arm assembly 16A travels along the slide 50 controlled by a timing belt drive 49. Movement of the assembly 16 A along slide 50 is computer controlled to correlate with the size of the core on which the cord is applied. One or more computers (not shown) are employed to coordinate rotation of core 42 (by ring motor 14); rotation of end of arm tooling assembly 34 (by ring motor 46); linear path adjustment of assembly 16A along the Z-axis (by timing belt drive of assembly 16A along slide 49); and tilting adjustment of assembly 34 (by servo-motor 52). The assembly thus precisely controls the movement of assembly 16A in three axis of rotation and along a linear path (slide 50) to enable tooling assembly 34 to accurately place cord 32 in an intended pattern on a surface 43 of a core 42 of varying size without need for specialized equipment to form a loop in the cord at the end of each traverse. Creation of the loop at the conclusion of each traverse is accomplished by an indexed controlled rotation of the core 42. Thus, the cord laying assembly functions to form the loop without the need for a finger mechanism to engage, press, and release the cord. The pattern of cord applied to the carcass layer upon core 42 may thus be tailored to provide optimum performance while conserving cord material, resulting in reduced cost of manufacture.

As will be appreciated, a reciprocal pivoting movement of the end of arm tooling head that alternately places one of the rollers 74, 76 into engagement with cord 32 while disengaging the opposite roller results in several significant advantages. First, in disengaging one of the rollers from the carcass layer, the frictional drag of the disengaged roller is eliminated. As a result, the associated drive motor that drives the end of arm tooling may operate with greater speed and efficiency. Additionally, redundant and unnecessary engagement of the disengaged roller from the cord 32 with the underlying elastomeric layer and the cord is eliminated, reducing the potential for damage to both the cord 32 and the underlying carcass layer. Moreover, in utilizing dual rollers mounted in-line, the speed of cord application is at which the cord 32 is applied to the carcass may be improved and the drive mechanism simplified.

It will be appreciated that the application head portion of the tooling 34 is air spring biased against the surface 43 of core 42 during the application of cord 32 through pressurized intake 94. The air spring created by intake 94 exerts a substantially constant force through nose housing 97 to rollers 74, 76. The biasing force upon rollers 74, 76 is applied to cord 32 as described above, and serves to pressure the cord 32 against a carcass layer previously applied to the core surface 43. The tackiness of the pre-applied layer retains the cord 32 at its intended placement. A more secure placement of the cord 32 results, and the potential for any unwanted, inadvertent post-application movement of the cord 32 from the underlying carcass layer is minimized. At the appropriate time for severing the cord 32 by means of the shearing assembly 98, separation of housings 89 and 85 is effected as shown in FIG. 15B, 16, 16B-D as described previously.

As described previously, to reposition the severed end of the cord 32 for another application cycle, pressurized air is introduced through intake portal 92 and pneumatically forces the free cord end down the axial passageway 80 to the cord outlet 78 between rollers 74, 76. Application of the cord to the carcass layer on the core 42 may then recommence.

With reference to FIGS. 1, 1A, and 2, it will further be appreciated that a plurality of like-configured arm assemblies 16 A-D may, if desired at the option of the user, be deployed at respective circumferential locations about the core 42 in operable proximity to the core surface 43. The annular core surface 43 may be divided of segmented into regions, with responsibility for each region assigned to one of the arm assemblies 16A-D. Actuation and utilization of each arm assembly 16A-D in laying down a cord pattern in each assembly's respective region of responsibility may be coordinated and occur substantially in unison. Operation of the arm assemblies 16A-D are computer controlled and the control of the assemblies is preferably synchronized such that completion of a cord ply will occur by the simultaneous operation of each arm assembly within their respective assigned annular surface region.

It will be appreciated that, by segmenting the core annular surface 43 between the multiple arm assemblies 16A-D, a faster completion of the cord ply, and hence a faster cycle time for completion of the finished tire, results. While four arm assemblies 16 A-D are shown, more or fewer arm assemblies may be deployed if desired.

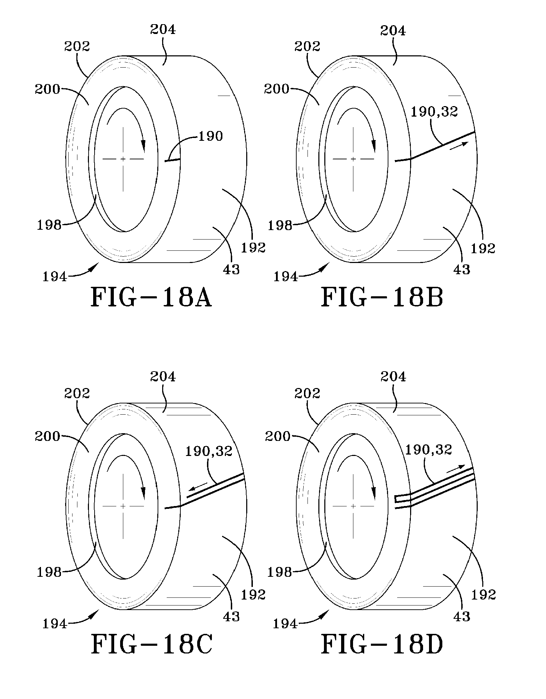

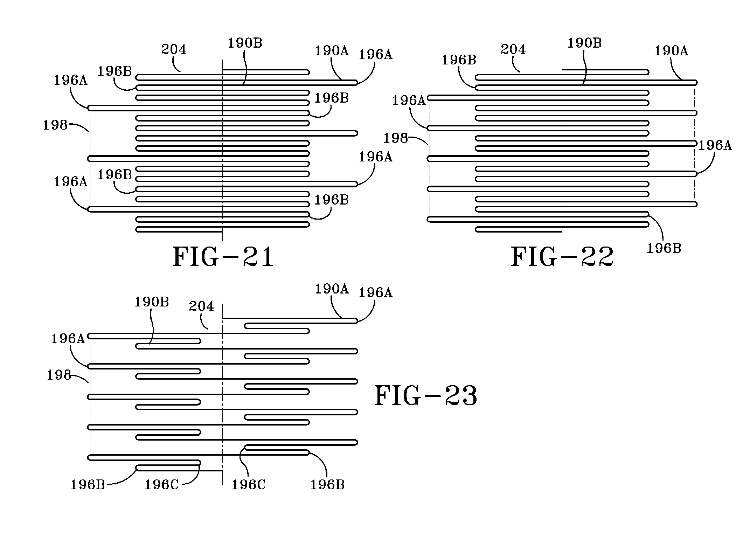

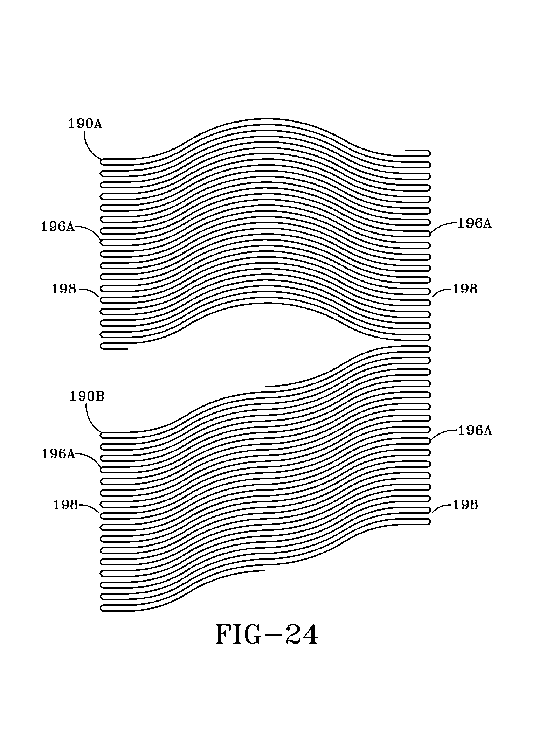

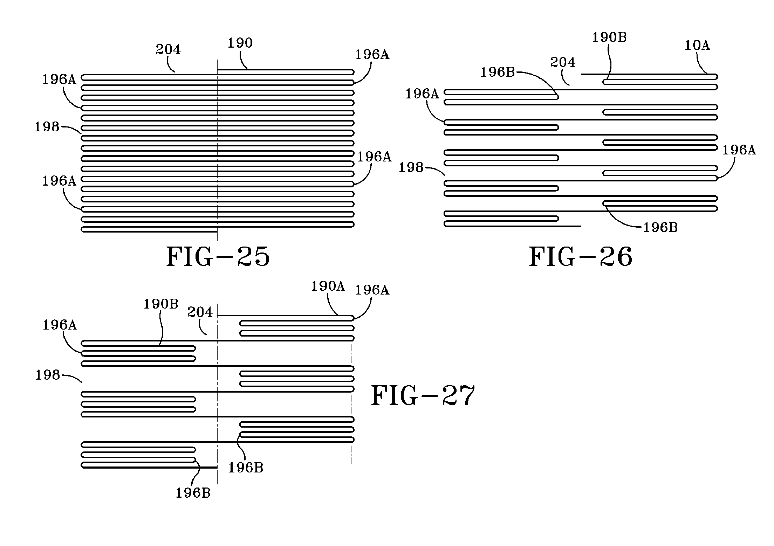

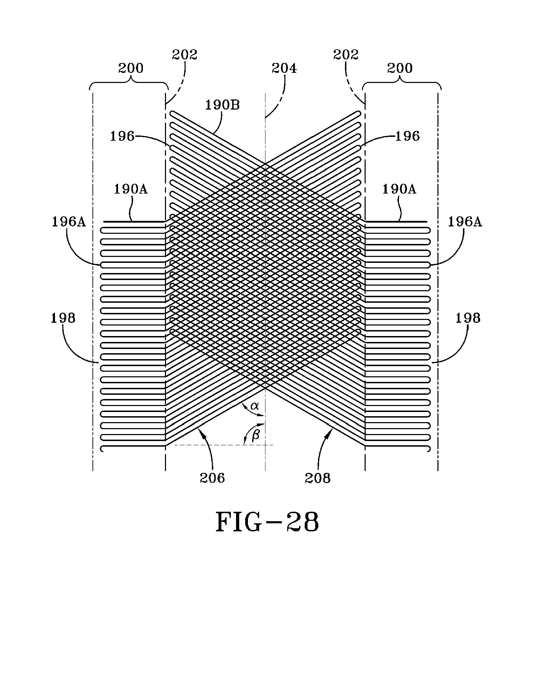

Referring to FIGS. 18A-D, 19-28. to advance the cords 32 on a specified path 190, the end of arm tooling mechanism 34 which contains the two rollers 74, 76 forms the cord outlet 78 which enables the cord path 190 to be maintained in this center. As illustrated, the cords 32 are held in place by a combination of embedding the cord into an elastomeric compound 192 previously placed onto the toroidal surface 43 and the surface tackiness of the uncured compound. Once the cords 32 are properly applied around the entire circumference of the toroidal surface 43 a subsequent lamination of elastomeric topcoat compound (not shown) can be used to complete the construction of the ply 194. It will be appreciated that more than one cord layer may be applied to the core 42, if desired or required. Additional elastomeric layers may be added to the core and additional cord layers applied as described above. Optionally, if desired, the top or bottom coat of elastomeric material may be eliminated and the cord applied in successive layers to form multiple plies on the core 42.

As illustrated and explained previously, the first roller 76 will embed the cord 32 on a forward traverse across the toroidal surface 43 as illustrated in Fig. 14. Once the cord path 190 has been transferred across the toroidal surface 43 the mechanism 34 stops and the cord 32 is advanced along the toroidal surface 43 by rotation of the core 42. The mechanism 34 then reverses its path 190 forming a loop 196 in the ply cord path 190. At this point a tilting of the end of arm tooling head block 97 causes the first roller 76 of the pair to disengage and the second roller 74 to engage the cord 32 to pull the cord 32 back across the toroidal surface 43.In the preferred embodiment the toroidal surface 43 is indexed or advanced slightly allowing a circumferential spacing or pitch (P) to occur between the first ply pathway down in the second return ply path. The loop 196 that is formed on the reverse traverse is slightly shifted to create the desired loop position. A looped end 196 may be formed and the second ply path 190 may be laid on the toroidal surface 43 parallel to the first ply path, or other geometric paths may be created by selective variation in the core indexing (rotation) coupled with the speed at which the end of arm tooling head traverses the core surface 43 in the forward and/or reverse directions.

The process is repeated to form a series of cords 32 that are continuous and which have the intended preselected optimal pattern. For example, without intent to limit the patterns achievable from the practice of the invention, the toroidal core 42 with the toroidal surface 43 with an elastomeric compound 192 laminated onto it may be indexed or advanced uniformly about its axis with each traverse of the pair of rollers 74,76 to create a linearly parallel path 190 uniformly distributed about the toroidal surface 43. By varying the advance of the cord 32 as the mechanism 34 traverses, it is possible to create non-linear parallel cord paths 190 to tune tire stiffness and to vary flexure with the load.

Preferably the cord 32 is wrapped around the tensioner assembly 58 to adjust and maintain the required tension in the cord 32 (FIG. 10). The pulley 65 is laterally adjustable to alter the tension in the belt 68 which, in turn engages the cord 32 passing beneath pulleys 64, 66 and over pulley 65. More or less tension in the belt 68 translates into more or less tension in the cord 32. If the cord 32 is too tight it will lift the cord from the coat laminate when the rollers 74, 76 reverse direction. If it is too loose it will not create a loop at the correct length. Moreover, the amount of tension applied has to be sufficiently small that it does not lift the cords 32 from their placed position on the toroidal surface 43. The cord 32 under proper tension will rest on the toroidal surface 43 positioned and stitched to an elastomeric layer 192 such that the tack between the cord 32 and the elastomeric layer 192 is larger than the tension applied by the tensioner assembly 58. This permits the cords 32 to lay freely onto the toroidal surface 43 without moving or separating during the ply construction period.

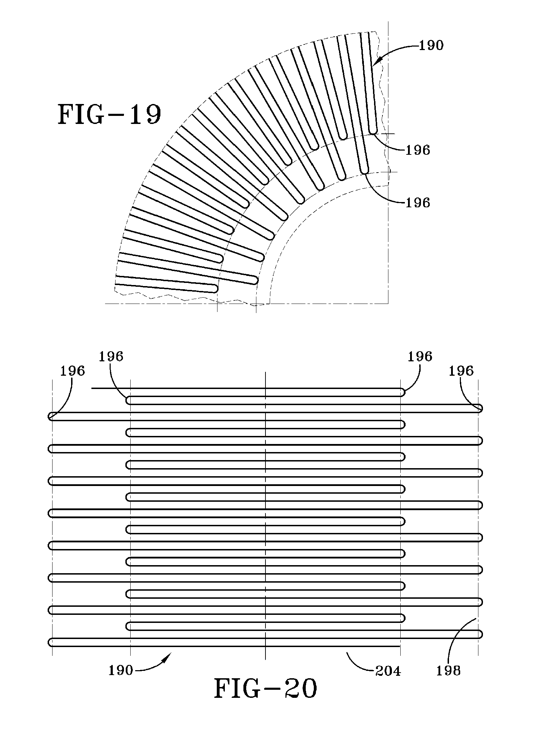

With reference to Figures 18A-D, depicted is a three dimensional view of a cylinder representing how the ply path 190 is initiated along what would generally be considered the bead region 198 of the carcass 194 along the tire sidewall 200 toward the shoulder region 202 of the toroidal surface 43 and then traverses across the toroidal surface 43 in an area commonly referred to as the crown 204 as illustrated in Figure 18B. In Figure 18B it will be noticed that the ply cord path 190 is laid at a slight angle. While the ply path 190 may be at any angle including radially at 90° or less, the ply path 190 also can be applied in a non-linear fashion. As shown in Figure 18C, once the ply cord 32 is traversed completely across the toroidal surface 43 and down the opposite side the loop 196 is formed as previously discussed and the cord 32 is brought back across the crown 204 as shown in Figure 18C. In Figure 18D the cord 32 then proceeds down the tire sidewall 200 towards the bead region 198 where it is turned forming a loop 196 as previously discussed and then traverses back across the toroidal surface 43 in a linear path 190 as illustrated that is parallel to the first and second ply cord paths 190. This process is repeated in Figures 19 and 20 as the toroidal surface 43 is indexed, creating a very uniform and evenly spaced ply cord path 190.

Other cord patterns may be devised and implemented using the end of arm tooling 34 of the present invention. The speed at which core 42 is rotated and or the speed of the traverse travel of the tooling head 56 across surface 43 may be varied in order to generate patterns of preferred configuration. By way of example, cord laying patterns are depicted in FIGS. 19-28 showing sample cord pattern configurations. The present invention is not intended to be limited to those patterns depicted and other patterns obvious to those skilled in the art may be devised.

From the foregoing, it will be appreciated that a bi-directional tooling head is mounted to reciprocally move in a forward and a reverse direction across an annular surface (such as, but not limited to a tire surface), preferably but not necessarily as the annular surface is rotated. The tooling head includes a plurality of rollers, described above as comprising the dual rollers 74, 76. However, more rollers may be deployed if desired. The rollers act to impress one or more cords on an elastomeric layer on the annular surface in the forward and reverse directions and a tilt mechanism for angular repositioning the rollers into alternative engagement with the annular surface in the forward and reverse directions. At least one roller engages against the annular surface in the forward direction and at least a second roller engages against the annular surface in the reverse direction while the first roller is disengaged.

The tilt mechanism to simultaneously engage and disengage the first and second rollers from the annular surface. The apparatus thus efficiently and expeditiously applies a cord layer to an underlying elastomeric layer in the process of building a tire to a final finished dimension, layer by layer, on a core. The cord layer may be configured in varied patterns pursuant to the design and performance requirements of the tire. The tooling head rollers are configured and mounted for alternating contact with the annular surface while each roller alternatively engages the cord along a respective application path. Such a configuration results in no more than necessary surface contact between the applicator head and the annular surface because both rollers are not in constant contact with the surface. The force required to move the applicator end of arm tooling is minimized. Moreover, the mechanism required to move the applicator head along the curvature of a tire carcass is simplified compared to fixed side by side rollers because a change of direction at the conclusion of a cord path traverse is achieved by angular repositionment of the head rollers. Tooling, manufacturing, and maintenance costs are thus minimized as well.

As explained in detail above and as illustrated in FIGS. 1, 1A, and 2, the subject invention contemplates a station 10 for the application of tire ply cord to an annular tire core assembly 11. The station 10 comprises circumferentially spaced apart applicator head assemblies 16 A-D, each applicator head assembly being proximally disposed to a respective assigned annular region of the core surface 43. While four applicator assemblies are shown, more or fewer may be employed. The applicator assemblies 16A-D are disposed opposite their respectively assigned regions of the core surface 43 and operate to lay down a cord pattern in their assigned region as the core 42 is rotationally indexed. Rotation of the core 42 to achieve synchronous indexing of surface 43 with the applicator head assemblies 16A-D is computer controlled and facilitates a faster application of the complete cord ply than would otherwise be possible from the use of a single applicator head assembly. The plurality of applicator heads thus operate independently within their respective assigned regions while the core annular surface is rotationally indexed in order to achieve a desired cord ply pattern.

## Claims

1. A ply application station for applying a tire carcass cord ply to an annular surface, the station comprising:
a core assembly configured to hold a tire component; and
a plurality of applicator heads disposed at respective spaced apart circumferential locations about said core assembly, each applicator head being proximally positioned to a respective assigned region of the annular surface;
wherein at least one ply cord is applicable by each applicator head to the annular surface region assigned respectively to each applicator head.

2. The ply application station according to claim 1, further comprising a drive coupled to said core assembly to rotatably index the annular surface a pre-determined angular distance to move each assigned surface region relative its respective assigned applicator head.

3. The ply application station according to claim 2, wherein the angular distance traveled by the annular surface is less than a complete revolution of the annular surface.

4. The ply application station according to at least one of the previous claims, wherein the plurality of applicator heads are operatable substantially in unison to apply the at least one ply cord to the annular surface region assigned respectively to each applicator head.

5. A ply application station according to at least one of the previous claims, wherein each applicator head comprises:
a cord engagement element configured to reciprocate in a forward and reverse direction across the annular surface while applying the tire cord to the annular surface, the cord engagement element including at least first and second cord engaging components; and
a re-orientation element configured to reposition the cord engagement element such that said first cord engaging component engages the annular surface in the forward direction and said second cord engaging component engages the annular surface in the reverse direction.

6. A ply application station according to claim 5 wherein the cord engagement element comprises a plurality of rollers, at least one roller engaging against the assigned annular surface region in the forward direction and disengaging from the assigned annular surface region in the reverse direction.

7. A method for applying a tire carcass cord ply to an annular surface of a tire component, the method comprising:
positioning a plurality of ply applicator heads at respective spaced apart circumferential locations about the annular surface, each applicator head being proximally positioned to a respective assigned region of the annular surface;
coordinating operation of the plurality of applicator heads for respective application of at least one ply cord by each head on the annular surface region assigned respectively to each applicator head.

8. The method according to claim 7, further comprising operating the applicator heads substantially in unison to substantially simultaneously apply the at least one ply cord of each applicator head on the annular surface region assigned respectively to the applicator head.

9. The method according to claim 7 or 8, further comprising rotationally indexing the annular surface in coordination with the application of the at least one ply cord of each applicator head on the annular surface region assigned respectively to the applicator head.

10. The method of at least one of the claims 7-10 wherein the combined application of the at least one ply cord to the annular surface regions by the plurality of applicator heads results in the formation of a substantially complete ply layer at least partially covering the annular surface in a preferred pattern.
